# FASCICULE DE BREVET EUROPEEN

(11) **EP 0 449 792 B1**
(45) Date de publication et mention de la délivrance du brevet: **10.08.1994**
(21) Numéro de dépôt: 91830127.6
(22) Date de dépôt: 28.03.1991
(51) Int. Cl.: A47J 31/06

(54) **Porte-filtre perfectionné pour percolateur**
Verbesserte Brühkopfeinheit für Espresso-Kaffeemaschinen
Improved filter holder for a percolator

(30) Priorité: 28.03.1990 IT 341690
(43) Date de publication de la demande: 02.10.1991
(73) Titulaire: ARIETE S.r.l., 50041 Settimello di Calenzano (Firenze) (IT)
(72) Inventeur: Baldacci, Lapo, I-50129 Firenze (IT)
(74) Mandataire: Martini, Lazzaro

(56) Documents cités:
- EP-A- 0 264 352
- DE-A- 3 829 416
- DE-U- 8 717 039
- FR-A- 1 581 695
- FR-A- 2 216 962
- FR-A- 2 565 087
- US-A- 3 413 909

## Description

La présente invention concerne un porte-filtre de machine pour café express prédisposé pour distribuer la boisson toujours à une même température élevée.

On connaît des machines pour café express, en particulier d'usage domestique, constituées d'un réservoir de l'eau froide, d'une pompe et d'une chaudière réchauffée électriquement dans laquelle la quantité d'eau nécessaire pour une tasse de boisson est rapidement surchauffée et sous pression est conduite à travers une coupelle filtrante, simplement appelée "filtre", dûment remplie de café moulu et ensuite la boisson de café est recueillie dans un récipient, appelé porte-filtre, lequel est pourvu dans sa partie inférieure d'une ou deux buses de sortie à travers lesquels la boisson de café s'écoule dans la tasse.
Dans les machines pour café express auxquelles nous nous intéressons, le porte-filtre est pourvu sur un côté d'une poignée radiale de prise et d'actionnement, supporte à l'intérieur le filtre et présente dans sa partie supérieure d'au moins une paire de dents radiales adaptées pour s'emboîter dans des sièges radiaux correspondants des embouchures de sortie de la chaudière en réalisant une sorte d' accouplement à baîonnette.

Un des inconvénients dont on se plaint le plus dans de tels dispositifs consiste dans le fait que la boisson qui s'écoule à travers le filtre vient en contact avec le porte-filtre qui entraîne une rapide et importante baisse de température; ceci est dû au fait que le porte-filtre est un organe massif réalisé habituellement par fusion en métal. Cette condition s'avère extrêmement négative en particulier dans les percolateurs utilisés relativement peu fréquemment, comme c'est le cas justement pour les percolateurs à usage domestique, et cela arrive surtout dans les premières tasses du fait que le porte-filtre est froid n'ayant pas eu le temps de réchauffer ou de rester chaud entre une utilisation et l'autre du percolateur.
La boisson de café obtenue dans ces conditions n'est pas suffisamment chaude et donc est désagréable à boire.
Cet inconvénient se rencontre cependant aussi dans les percolateurs plus sophistiqués et coûteuses.

Le document US 3.413.909 décrit une machine pour café express munie d'un groupe porte-filtre, lequel comprend un filtre constitué essentiellement par une pluralité de disques coaxiaux, juxtaposés et percés de manière appropriée pour permettre l'écoulement du café obtenu, du filtre vers un distributeur en forme d'entonnoir situé au-dessous qui est réalisé en matière isolante du point de vue thermique.
Mais ce dispositif connu s'avère de fabrication complexe, et donc coûteuse, et n'est utilisable qu'avec un percolateur spécifiquement conçu pour permettre son logement.

Le but principal de la présente invention est de remédier à l'inconvénient précité, c'est-à-dire de réaliser un porte-filtre perfectionné qui n'entraîne pas un refroidissement excessif de la boisson à la sortie de la machine.

Un autre but de la présente invention est de proposer des moyens de perfectionnement du porte-filtre qui puissent être utilisés sur n'importe quel type de percolateur, indépendemment des caractéristiques du percolateur lui-même.

Un autre but de la présente invention est de résoudre le problème précédant avec une structure simple, de réalisation relativement facile, d'emploi sûr et de fonctionnement efficace ainsi que de coût relativement réduit.

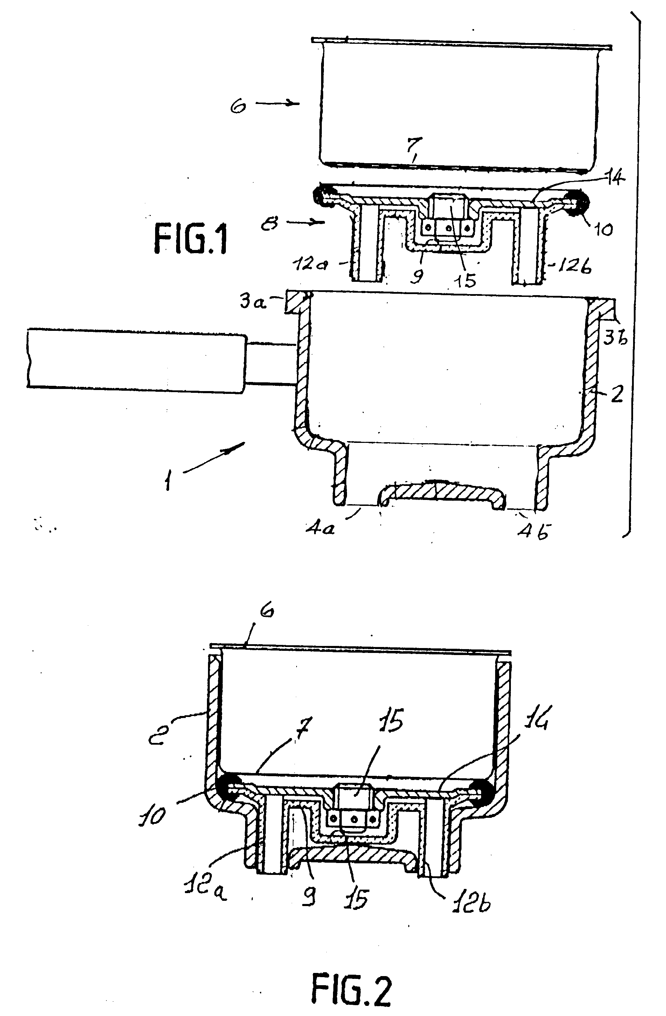

Cette tâche et ces buts sont atteints par la présente invention en réalisant le porte-filtre pour percolateur connu par US-A-3413909 comprenant un corps creux, réalisé en un materiau mauvais conducteur de la chaleur, à travers lequel la boisson de café chaude qui s'écoule du filtre est obligée de passer jusqu'à la sortie du porte-filtre sans le toucher, avec ledit corps creux pourvu d'une joint d'étanchéité entre le filtre et le porte-filtre comme décrit dans la partie caracterisante de la revendication 1. D'autres particularités résulterons plus claires et évidentes à la lumière de la description détaillée d'une forme de réalisation préférée, mais pas exclusive, d'un porte-filtre conformément à l'invention, illustrée à titre indicatif, mais non limitatif, dans l'unique planche de dessins, sur lesquels la FIG. 1 représente une vue explosée en coupe avec un plan diamétral d'un porte-filtre perfectionné conformément à l'invention et la FIG. 2 représente la même vue du porte-filtre de Fig. 1 dans la position d'usage.

En se référant en particulier à ces figures, on a indiqué globalement par 1 un porte-filtre pour percolateur conformément à l'invention.
Le porte-filtre 1 comprend de manière connue une sorte de gobelet 2 qui possède en correspondance de la partie supérieure deux ailettes extérieures 3a,3b pour l'accouplement rapide, sensiblement à baîonnette, avec un dispositif d'accrochage présent sur tous les percolateurs de type traditionnel. Le gobelet 2 présente dans sa partie inférieure une paire de becs 4a,4b de distribution de la boisson et possède radialement un manche 5 de prise et de manoevre.
A l'intérieur du porte-filtre se trouve supporté un filtre 6 avec le fond 7 percé pour le passage du liquide.
Dans une forme de réalisation habituelle, le gobelet 2 est réalisé en métal et il est obtenu par fusion, et la boisson, en arrivant en contact avec cette masse métallique froide, subit un refroidissement considérable.

L'invention consiste à réaliser, en un matériau mauvais conducteur de la chaleur tel que par exemple un matériau du type matière plastique, un corps creux à travers lequel la boisson qui s'écoule du filtre passe jusqu'à la sortie du porte-filtre sans le toucher.
Plus particulièrement ledit corps creux est constitué d'un culot 9 avec deux becs 12a,12b qui s'insèrent passant dans les becs 4a,4b du porte-filtre et d'une plaque superieure 14 qui comprend au centre une soupape 15 d'entrée et de surpression; les bords périphériques du culot 9 et de la plaque 14 sont groupés entre eux au moyen d'un joint annulaire 10 lequel étant serré entre le bord du fond du filtre 6 et le fond du porte-filtre 2 réalise l'étanche d'eau entre le filtre 6 et le porte-filtre 2 de sorte que la boisson qui s'écoule du filtre 6 est obligée de passer - à travers la soupape 15 - dans le corps creux 8 et d'ici dans la tasse qui est sous les becs 12a,12b sans jamais toucher le porte-filtre 2.
La soupape 15, connue en soi, augmente le temps de présence de la vapeur d'eau au contact de la poudre de café qui est dans le filtre 6 et permet de réaliser une mousse abondante et dense de la boisson.
Dans cette version le culot 9 porte, façonné en son centre, une cavité 16 pour le logement de ladite soupape 15.

On a remarqué qu'avec un porte-filtre 2 pourvu dudit corps creux 8, en matériau mauvais conducteur de la chaleur, la température de la boisson produite est pratiquement toujours la même et en tout cas, lorsque le porte-filtre 2 est froid, la température de la boisson est supérieure d'une quinzaine de degrés centigrades par rapport à la température d'une boisson obtenue avec les percolateurs connus.

## Revendications

1. Porte-filtre pour percolateur comprenant un gobelet (2) et un filtre (6) dont ledit gobelet (2) est pourvu d'un corps creux (8) amovible, réalisé en un matériau mauvais conducteur de la chaleur, lequel est logé au dessous du filtre (6) et à travers lequel la boisson qui s'écoule du filtre est obligée de passer jusqu'à la sortie du gobelet (2) du porte-filtre sans le toucher caractérisé en ce que ledit corps creux (8) est constitué d'un culot (9) et d'une plaque supérieure (14) qui sont groupés entre eux au moyen d'un joint annulaire (10) lequel réalise aussi l'étanchéité à l'eau entre le filtre (6) et le gobelet (2) du porte-filtre.

2. Porte-filtre selon la revendication 1 caractérisé en ce que l'entrée de la plaque (14) dudit corps creux (8) est constitué d'une soupape (15) de surpression.

3. Porte-filtre selon les revendications 1 caractérisé en ce que le culot (9) dudit corps creux (8) porte façonné une cavité (16) pour le logement de ladite soupape (15) et est pouvu d'au moins un bec (12a, 12b) passant dans un correpondant bec (4a, 4b) du gobelet (2) du porte-filtre.

## Patentansprüche

1. Brühkopf für eine Kaffeemaschine, umfassend einen Becher (2) und einen Filter (6), wobei dieser Becher (2) mit einem herausnehmbaren, aus einem die Wärme schlecht leitenden Material hergestellten Hohlkörper (8) ausgestattet ist, welcher unterhalb des Filters (6) angeordnet ist und durch den das Getränk, welches aus dem Filter herausläuft, bis zum Ausgang des Bechers (2) des Brühkopfes ohne Berührung dieses letzeren hindurchtreten muß, dadurch **gekennzeichnet,** daß dieser Hohlkörper (8) aus einem Sockel (9) und einer oberen Platte (14) gebildet ist, welche mittels einer Ringdichtung (10) zusammengehalten werden, die auch die Wasserdichtheit zwischen dem Filter (6) und dem Becher (2) des Brühkopfes gewährleistet.

2. Brühkopf nach Anspruch 1, dadurch **gekennzeichnet,** daß der Eingang der Platte (14) dieses Hohlkörpers (8) durch ein Überdruckventil (15) gebildet ist.

3. Brühkopf nach Anspruch 1, dadurch **gekennzeichnet,** daß der Sockel (9) dieses Hohlkörpers (8) eine für die Aufnahme dieses Ventils (15) gebildete Ausnehmung (16) trägt und mit wenigstens einem Mundstück (12a, 12b) ausgestattet ist, welches durch ein zugeordnetes Mundstück (4a, 4b) des Bechers (2) des Brühkopfes hindurchgreift.

## Claims

1. Filter holder for percolator, consisting of a beaker (2) and a filter (6), where the said beaker (2) is provided with a fixed hollow body (8), made of a poor thermally conducting material, which is situated below the filter (6) and through which the drink flowing from the filter must pass to the outlet of a beaker (2) of the filter holder without touching it, characterized in that the said hollow body (8) consists of a base (9) and of an upper plate (14), which are connected together by an annular joint (10), which also provides the sealing for the water between the filter (6) and the beaker (2) of the filter holder.

2. Filter holder according to Claim 1, characterized in that the inlet of the plate (14) of the said hollow body (8) consists of an excess pressure valve (15).

3. Filter holder according to Claim 1, characterized in that the base (9) of the said hollow body (8) has a cavity (16) made in it for locating the said valve (15) and is provided with at least one spout (12a, 12b) fitting into the corresponding spout (4a, 4b) of the beaker of the filter holder.
